# EUROPÄISCHE PATENTSCHRIFT

(11) **EP 4 129 523 B1**
(45) Veröffentlichungstag und Bekanntmachung des Hinweises auf die Patenterteilung: **23.07.2025**
(21) Anmeldenummer: 22181949.3
(22) Anmeldetag: 29.06.2022
(51) Int. Cl.: B21D 43/18, B23P 19/00

(54) **FÜGEKOPF ZUR BEFESTIGUNG EINES BEFESTIGUNGSELEMENTES AUF DER OBERFLÄCHE EINES BAUTEILES**
JOINING HEAD FOR FIXING A FASTENING ELEMENT TO THE SURFACE OF A COMPONENT
TÊTE D'ASSEMBLAGE DESTINÉE À LA FIXATION D'UN ÉLÉMENT DE FIXATION À LA SURFACE D'UN COMPOSANT

(30) Priorität: 06.08.2021 DE 102021120555
(43) Veröffentlichungstag der Anmeldung: 08.02.2023
(73) Patentinhaber: Eckold GmbH & Co. KG, 37444 St. Andreasberg (DE)
(72) Erfinder: Klinge, Markus, 37444 St. Andreasberg (DE); Schneider, Martin, 37431 Bad Lauterberg (DE); Hoppe, Sebastian, 37441 Bad Sachsa (DE); Borchers, Jens, 37431 Bad Lauterberg (DE)
(74) Vertreter: Gramm, Lins & Partner Patent- und Rechtsanwälte PartGmbB

(56) Entgegenhaltungen:
- DE-A1- 102011 009 259
- US-A1- 2011 132 520

## Beschreibung

Die Erfindung betrifft einen Fügekopf zur Befestigung eines Befestigungselementes mittels einer Matrize auf der Oberfläche eines Bauteils mit einem in einer ersten Verschieberichtung linear verschiebbaren Greifer und einem in einer zweiten Verschieberichtung linear verschiebbaren Magazin zur Aufnahme einer Mehrzahl von Befestigungselementen, wobei die erste Verschieberichtung quer zur zweiten Verschieberichtung verläuft.

Ein solcher Fügekopf ist beispielsweise aus der US 2011/132520 A1 bekannt. Darin werden Befestigungselemente beschrieben, die mit einem Werkstück verbunden werden und zum Halten von Bau- und Funktionsteilen dienen.

Einen ähnlichen Fügekopf offenbart die DE 10 2011 009 259 A1. Der Fügekopf ist mit einem Roboter verbindbar, sodass ein Befestigungselement automatisch auf einer Werkstückoberfläche aufsetzbar und dort befestigbar ist. Hierzu ist ein Greifer vorgesehen, mit dem über eine Schwenkbewegung das Befestigungselement aus dem Magazin entnehmbar und in einer Fügerichtung ausrichtbar ist. Mittels des Greifers wird das Befestigungselement dann auf die Oberfläche des Werkstücks aufgesetzt und dort klebend befestigt.

Die Ausgestaltung des Greifers ist aufgrund der notwendigen Verschwenkbarkeit zum Ergreifen eines Befestigungselementes und der notwendigen linearen Verschiebbarkeit zur Auflage des Befestigungselementes auf der Oberseite des Werkstücks aufwändig. Der Erfindung liegt deshalb die Aufgabe zugrunde, den Aufbau des Fügekopfes zu vereinfachen.

Zur Problemlösung zeichnet sich ein gattungsgemäßer Fügekopf gemäß dem Anspruch 1 dadurch aus, dass der Greifer als mindestens eine Matrize ausgebildet ist, kann die Befestigung des Bauteils mittels Durchsetzfügens erfolgen.

Der hierzu notwendige mindestens eine Amboss muss dann natürlich auf der gegenüberliegenden Seite am Bauteil anliegen. Vorzugsweise sind zwei Matrizen und zwei Ambosse vorgesehen. Dadurch dass die erste Verschieberichtung quer zur zweiten Verschieberichtung verläuft, kann das Magazin unter den Greifer geschoben werden, dieser kann in seiner Fügerichtung auf das Magazin zufahren, ein Befestigungselement ergreifen und entgegen der Fügerichtung zurückfahren. Dann kann das Magazin zurückgezogen werden und der Greifer erneut in seiner Fügerichtung auf das Bauteil zufahren und das Befestigungselement auf der Oberfläche des Bauteils aufsetzen.

Vorzugsweise verläuft die erste Verschieberichtung (Fügerichtung der Matrize) im Winkel von 90° zur zweiten Verschieberichtung.

Wenn das Magazin auf seiner dem Greifer zugewandten Seite mehrere Stufen aufweist und jede Stufe ein Befestigungselement aufnimmt, können gegebenenfalls auch mehrere Befestigungselemente gleichzeitig aus dem Magazin entnommen werden.

Vorzugsweise sind zwischen zwei und zehn Stufen vorgesehen.

Wenn der Fügekopf aus einem im Wesentlichen C-förmigen Grundkörper mit zwei zueinander parallel angeordneten Längsschenkeln besteht, kann das Magazin zwischen den beiden Längsschenkeln angeordnet werden.

Das Magazin ist vorzugsweise in der zweiten Verschieberichtung so weit verschiebbar, dass es an dem Greifer vorbeiführbar ist. Durch diese Ausgestaltung ist es möglich, in der vom Fügekopf entfernten Position neben dem Greifer diesen mit frischen Befestigungselementen zu befüllen.

Ist das Bauteil z. B. Teil einer Kraftfahrzeugkarosserie kann das Befestigungselement zum Befestigen z. B. einer Zierleiste dienen.

Die Verschiebung des Magazins kann elektromotorisch oder pneumatisch erfolgen. Die Befestigungselemente können vorzugsweise über eine Magnetkraft oder über einen Unterdruck in dem Magazin und/oder der Matrize bzw. dem Greifer festgehalten werden, sodass sichergestellt ist, dass diese beim Zustellen des Magazins und beim Bewegen des Fügekopfes nicht aus den Aufnahmen herausfallen können.

Die Stufen können nach oben weisende Aufnahmezapfen aufweisen, die in komplementär ausgebildete Löcher in den Befestigungselementen eingreifen. Durch diese Ausgestaltung werden die Befestigungselemente unverrückbar im Magazin positioniert und können so sicher von dem Greifer erfasst werden.

Mit Hilfe einer Zeichnung soll ein Ausführungsbeispiel der Erfindung nachfolgend näher erläutert werden. Es zeigen:

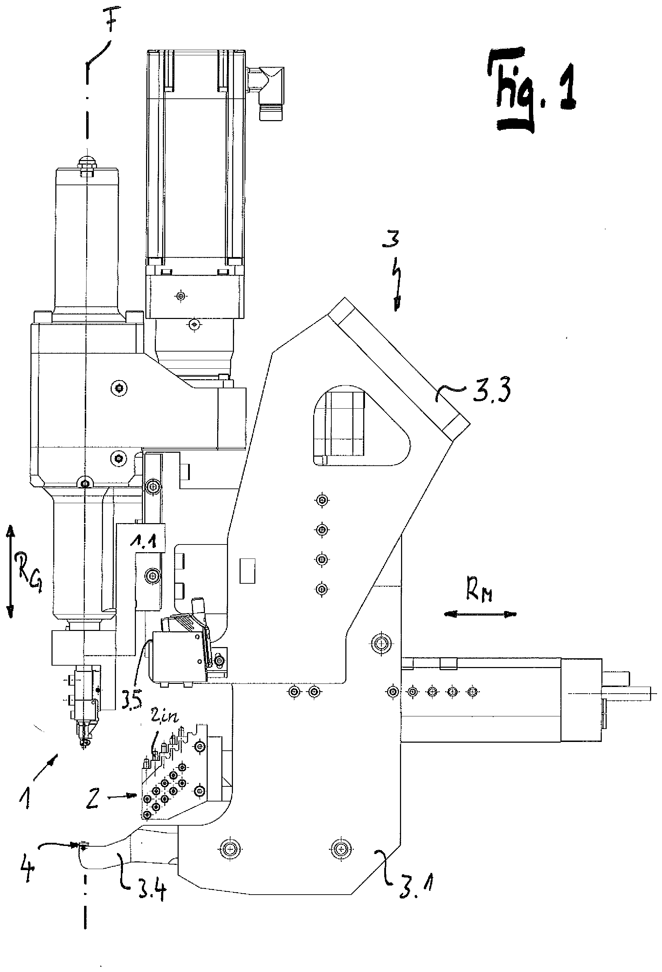

- Figur 1 -: die Seitenansicht des Fügekopfes in einer ersten Stellung des Magazins;
- Figur 2 -: die perspektivische Darstellung des Fügekopfes in einer zweiten Position des Magazins;
- Figur 3 -: die Ansicht nach Figur 1 in einer dritten Position des Magazins;
- Figur 4a -: eine Einzelheit des Fügekopfes in Seitenansicht;
- Figur 4b -: die Ansicht der Einzelheit nach Figur 4a;.
- Figur 4c -: den Schnitt entlang der Linie A-A nach Figur 4a;
- Figur 4d -: eine perspektivische Darstellung der Einzelheit nach Figur 4a;
- Figur 4e -: eine weitere perspektivische Darstellung der Einzelheit nach Figur 4a;
- Figur 5a -: eine Einzelheit des Fügekopfes in Seitenansicht vor dem Durchsetzfügen;
- Figur 5b -: die Ansicht der Einzelheit nach Figur 5a;.
- Figur 5c -: den Schnitt entlang der Linie A-A nach Figur 5a;
- Figur 5d -: eine perspektivische Darstellung der Einzelheit nach Figur 5a;
- Figur 5e -: eine weitere perspektivische Darstellung der Einzelheit nach Figur 5a;
- Figur 6a -: das Bauteil mit dem Befestigungselement;
- Figur 6b -: den Schnitt entlang der Linie A-A nach Figur 6a;
- Figur 6c -: eine perspektivische Darstellung der Einzelheit nach Figur 6a;
- Figur 6d. -: eine weitere perspektivische Darstellung der Einzelheit nach Figur 6a;
- Figur 7a -: eine Einzelheit des Fügekopfes in Seitenansicht nach dem Durchsetzfügen;
- Figur 7b -: die Ansicht der Einzelheit nach Figur 7a;.
- Figur 7c -: den Schnitt entlang der Linie A-A nach Figur 7a;
- Figur 7d -: eine perspektivische Darstellung der Einzelheit nach Figur 7a;
- Figur 7e -: eine weitere perspektivische Darstellung der Einzelheit nach Figur 7a.

Der Fügekopf ist mehrteilig aufgebaut und besteht im Wesentlichen aus dem C-förmig ausgebildeten Bügel 3, der zwei parallel zueinander verlaufende Längsschenkel 3.1, 3.2 aufweist und - in der Zeichnung nach - unten geöffnet ist. Zwischen den beiden Längsschenkeln 3.1, 3.2 ist das Magazin 2 in Richtung R_{M} verschiebbar angeordnet. Die Verschiebung kann elektromotorisch, beispielsweise mittels eines Inkrementalmotors, oder pneumatisch erfolgen. Ebenfalls am Bügel 3 befestigt ist der als Matrize ausgebildete Greifer 1, der elektromotorisch in - auf der Zeichnung - vertikaler Richtung R_{G} linear verschiebbar ist. Über eine Anschlussplatte 3.3 kann der Fügekopf an einem Roboterarm befestigt werden. Der Matrize 1 gegenüberliegend ist konzentrisch zur Fügeachse F ein Stempel 4 an einem am unteren Ende der Längsschenkel 3.1, 3.2 ausgebildeten Horn 3.4 befestigt. An der Aufnahme der Matrize/des Greifers 1, die hier nicht näher bezeichnet ist, sind zwei Anschläge 1.1, 1.2 vorgesehen, die mit Gegenanschlägen 3.5, 3.6 an den Längsschenkeln 3.1, 3.2 zusammenwirken.

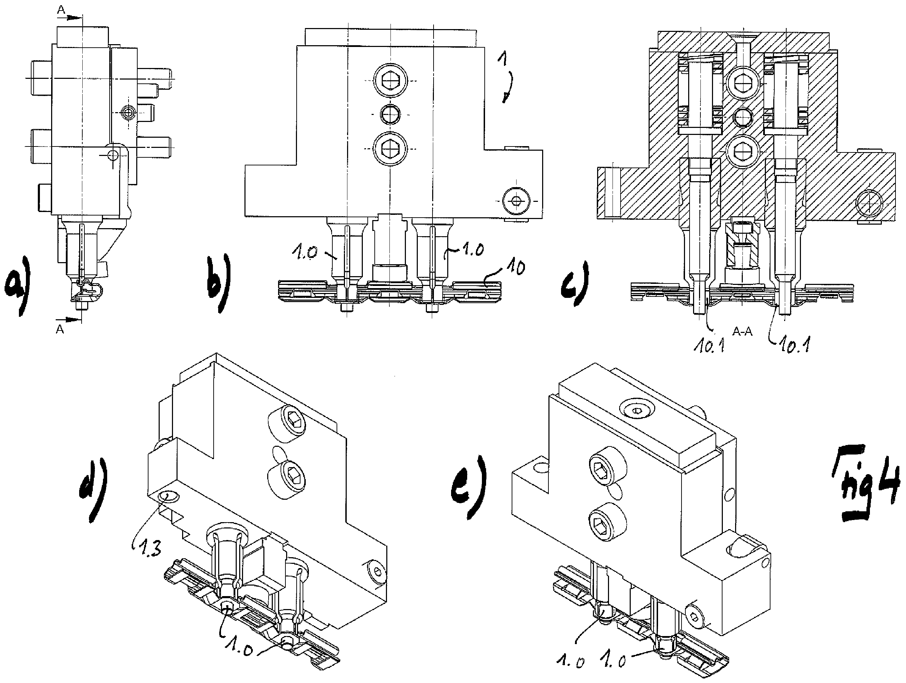

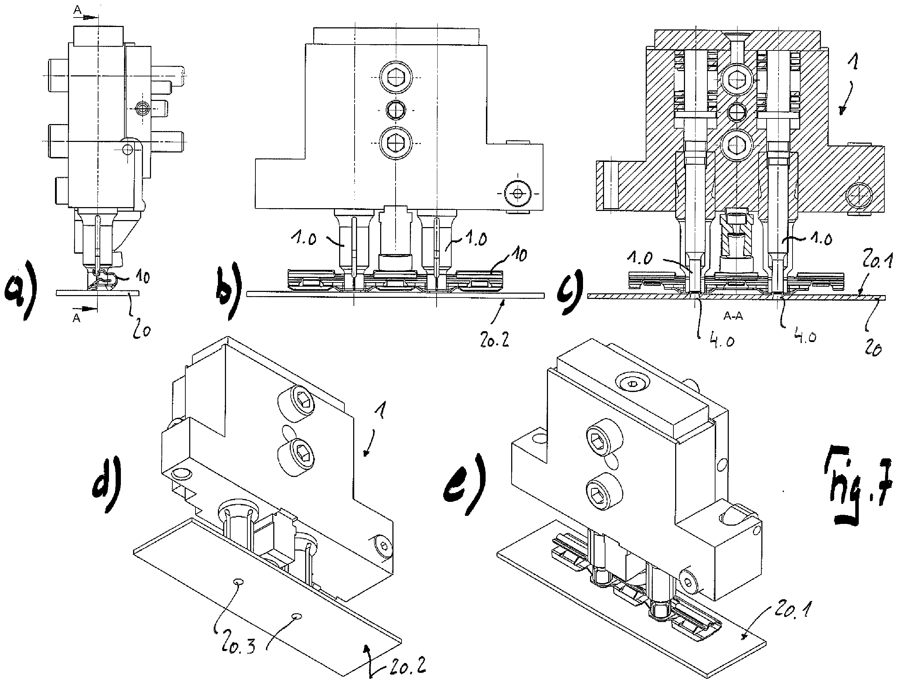

Wie die Figuren 4 bis 7 zeigen, sind der Greifer bzw. die Matrize 1 mit zwei Greifelementen bzw. Matrizenelementen 1.0 ausgebildet, was als ein weiteres Ausführungsbeispiel gesehen werden kann. Wenn nachfolgend auf Greifer/Matrize 1 bzw. Stempel 4 verwiesen wird, kann dies inkludiert auch auf zwei Matrizenelemente 1.0 und entsprechend zwei Stempelelemente 4.0 (vgl. Figur 7) bezogen verstanden werden.

Die dem Greifer 1 zugewandte Oberseite des Magazins 2 ist mit einer Mehrzahl von Stufen 2.1, 2.2, 2.3, ..., 2.n ausgebildet. Es sind vorzugsweise zwei bis zehn Stufen 2.n vorgesehen. Die Stufen 2.n sind mit nach oben vorspringenden Aufnahmezapfen 2. in versehen. Die Befestigungselemente 10 weisen kongruent zu dem Umfang der Aufnahmezapfen 2.in ausgebildete Löcher oder Bohrungen 10.3 auf, sodass die Befestigungselemente 10 auf zwei Aufnahmezapfen 2.in, über die Löcher 10.3 positioniert werden können. Dadurch nehmen sie eine definierte Lage ein und der Greifer 1 bzw. die Matrize 1 kann die Befestigungselemente 10 sicher ergreifen. Um die vom Greifer 1 aufgenommenen Befestigungselemente 10 sicher zu halten, können diese mittels Magnetkraft oder pneumatisch angezogen werden. Das Anziehen mittels Magnetkraft setzt natürlich voraus, dass die Befestigungselemente 10 aus einem magnetischen Material bestehen.

Figur 4 zeigt die Darstellung einer Matrize 1 mit den zwei parallel nebeneinander angeordneten Matrizenelementen 1.0, die ein Befestigungselement 10 erfasst und aus dem Magazin 2 herausgenommen haben. Diese Ausgestaltung wird bevorzugt verwendet, wenn das Befestigungselement 10 mit dem Bauteil 20 mittels Durchsetzfügens verbunden wird.

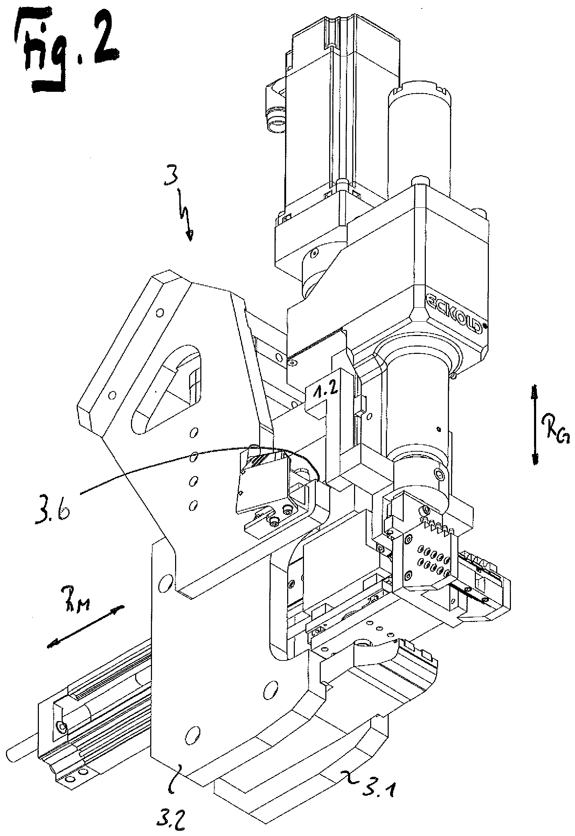

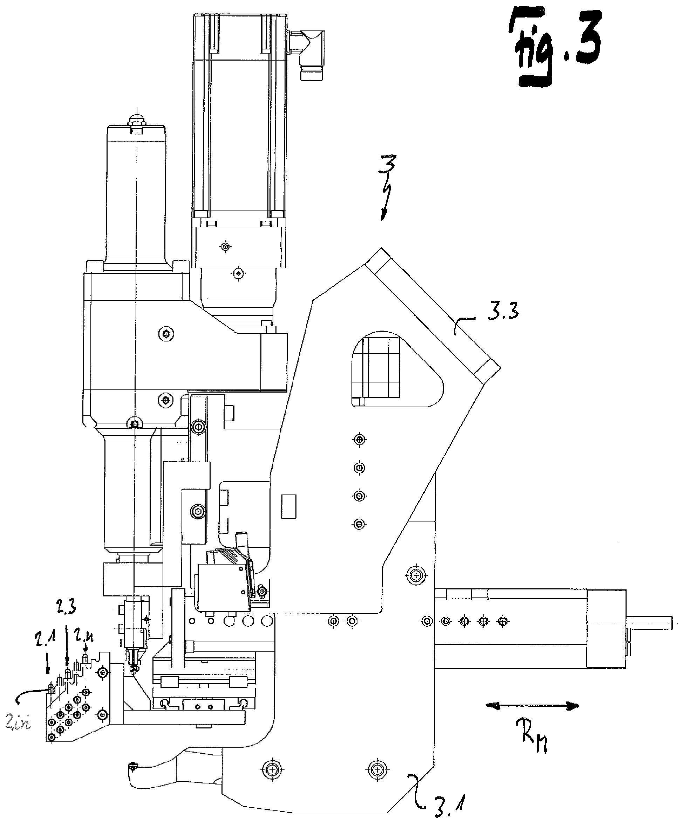

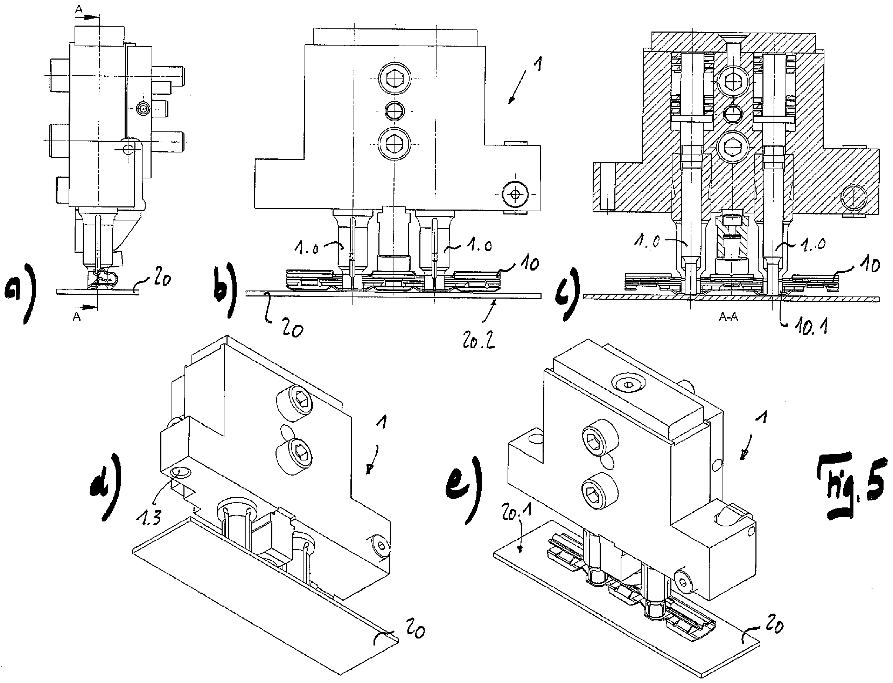

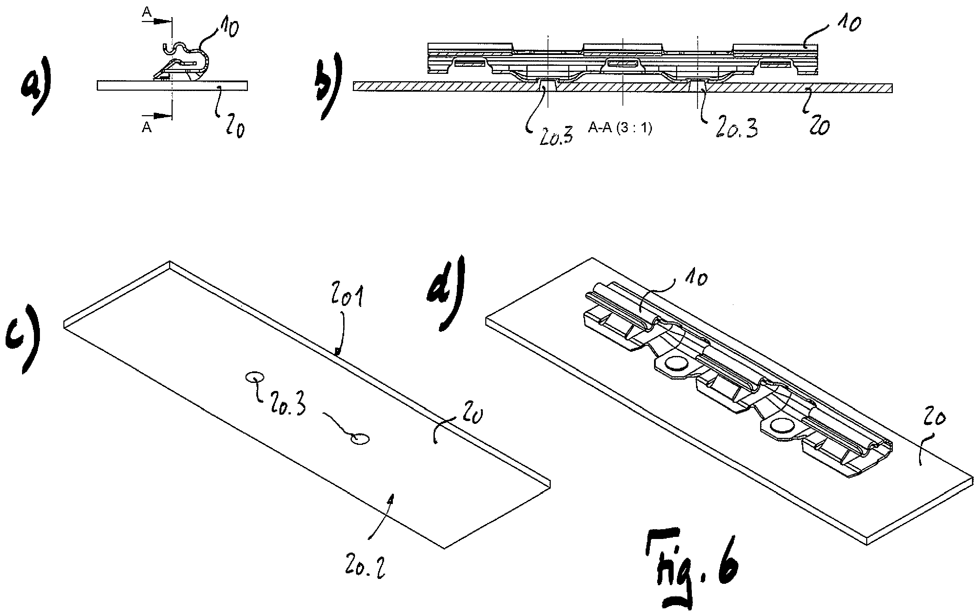

Nachfolgend soll die Arbeitsweise des Fügekopfs beim Durchsetzfügen kurz erläutert werden:
Um ein oder mehrere Befestigungselemente 1 aus dem Magazin 2 zu entnehmen, wird dieses in Richtung R_{M} soweit verschoben, dass der Greifer 1 exakt über dem oder den zu entnehmenden Befestigungselementen 10 (Fügerichtung F) liegt. Dann wird der Greifer 1 nach unten in Richtung R_{G} auf das Magazin 2 zugefahren und ein oder mehrere Befestigungselemente 10 magnetisch oder pneumatisch vom Magazin 2 gelöst und vom Greifer 1 magnetisch oder pneumatisch angezogen (Figur 2). Damit der Greifer 1 und das Magazin 2 bei der Übergabe der Befestigungselemente 10 exakt zueinander ausgerichtet sind, ist an der Unterseite des Greifers 1 eine Positionierbohrung 1.3 vorgesehen, in die ein nicht gezeigter Positionierstift am Magazin 2 eintaucht. Anschließend wird das Magazin 2 in Gegenrichtung R_{M} zurückgefahren, und der Weg in Fügerichtung F für den Greifer 1 bzw. die Matrize 1 ist frei. Zusammen mit dem Befestigungselement 10 wird die Matrize 1 in Richtung R_{G} nach unten verschoben und das Befestigungselement 10 auf die Oberseite 20.1 des Werkstücks 20 aufgelegt (Figur 5). Bei einer weiteren Verschiebung der Matrize 1 in Richtung R_{G} kommen die Anschläge 1.1, 1.2 in Berührung mit den Gegenanschlägen 3.5, 3.6 und im weiteren Verlauf der Bewegung werden durch die Abwärtsbewegung der Matrize 1 die Längsschenkel 3.1, 3.2 nach oben gezogen, sodass der Stempel 4 zur Anlage an der Unterseite 20.2 des Bauteils 20 gelangt und das Durchsetzfügen erfolgt. Dann ist das Bauelement 10 mit dem Bauteil 20 fest verbunden. Figuren 6c und 7d zeigen die von den Stempelelementen 4.0 beim Durchsetzfügen an der Unterseite 20.2 des Bauteils 20 entstehende Eindrücke 20.3. Sind alle Befestigungselemente 10 aus dem Magazin 2 entnommen, wird dieses in die in Figur 3 gezeigte Position in Richtung R_{M} verschoben, sodass die Aufnahmen, welche kongruent zu den Stufen 2.n verlaufen, neu befüllt werden können und die jeweiligen Stufen 2.1, 2.2, 2.3, ... 2.n von oben frei zugänglich sind. Dann können die Entnahme und das Durchsetzfügen wie vorstehend beschrieben erneut beginnen.

**In** der Regel wird aus dem Magazin 2 immer nur ein einzelnes Befestigungselement 10 entnommen und mit dem Bauteil 20 verbunden. Durch eine entsprechende Ausgestaltung des Greifers bzw. der Matrize 1 können auch mehrere Befestigungsteile 10 gleichzeitig entnommen und mit einem Bauteil 20 befestigt werden. Denkbar ist es auch, dass jedes Greifer-/Matrizenelement 1.0 ein separates Bauteil entnimmt und diese dann gleichzeitig mittels Durchsetzfügens mit dem Bauteil 20 verbunden werden.

### Bezugszeichenliste

- 1: Greifer/Matrize
- 1.0: Greiferelement/Matrizenelement
- 1.1: Anschlag
- 1.2: Anschlag
- 1.3: Positionierbohrung
- 2: Magazin
- 2.1: Stufe
- 2.2: Stufe
- 2.3.: Stufe
- 2.n: Stufe
- 2.in: Aufnahmezapfen
- 3: Grundkörper
- 3.1: Längsschenkel
- 3.2: Längsschenkel
- 3.3: Befestigungsflansch
- 3.4: Horn
- 3.5: Gegenanschlag
- 3.6: Gegenanschlag
- 4: Stempel
- 4.0: Stempelelement
- 10: Befestigungselement
- 10.1: Loch/Bohrung
- 20: Bauteil
- 20.1: Oberseite
- 20.2: Unterseite
- 20.3: Vertiefung
- F: Fügerichtung
- R_{G}: Richtung
- R_{M}: Richtung

## Patentansprüche

1. Fügekopf zur Befestigung eines Befestigungselementes (10) mittels einer Matrize auf der Oberfläche (20.1) eines Bauteils (20) mit einem in einer ersten Verschieberichtung R_{G} linear verschiebbaren Greifer (1) und einem in einer zweiten Verschieberichtung R_{M} linear verschiebbaren Magazin (2) zur Aufnahme einer Mehrzahl von Befestigungselementen (10), wobei die erste Verschieberichtung R_{G} quer zur zweiten Verschieberichtung R_{M} verläuft, **dadurch gekennzeichnet, dass** der Greifer (1) als mindestens eine Matrize ausgebildet ist und die Befestigung des Bauteils (20) mittels Durchsetzfügens erfolgt.

2. Fügekopf nach Anspruch 1, **dadurch gekennzeichnet, dass** die erste Verschieberichtung R_{G} im Winkel von 90° zur zweiten Verschieberichtung R_{M} verläuft.

3. Fügekopf nach einem der vorstehenden Ansprüche, **dadurch gekennzeichnet, dass** das Magazin (2) auf einer dem Greifer (1) zugewandten Seite mehrere Stufen (2.1, 2.2, 2.3, ... 2.n) aufweist, und jede Stufe (2.1, 2.2, 2.3, ... 2.n) ein Befestigungselement (10) aufnimmt.

4. Fügekopf nach Anspruch 3, **dadurch gekennzeichnet, dass** mindestens zwei und höchstens zehn Stufen (2.1, 2.2, 2.3, ... 2.n) vorgesehen sind.

5. Fügekopf nach einem der vorstehenden Ansprüche, **dadurch gekennzeichnet, dass** der Fügekopf einen im Wesentlichen C-förmigen Grundkörper (3) mit zwei zueinander parallel angeordneten Längsschenkeln (3.1, 3.2) umfasst und das Magazin (2) zwischen den beiden Längsschenkeln (3.1, 3.2) angeordnet ist.

6. Fügekopf nach einem der vorstehenden Ansprüche, **dadurch gekennzeichnet, dass** das Magazin (2) in der zweiten Verschieberichtung R_{M} so weit verschiebbar ist, dass es an dem Greifer (1) vorbeiführbar ist.

7. Fügekopf nach einem der vorstehenden Ansprüche, **dadurch gekennzeichnet, dass** die Verschiebung des Magazins (2) elektromotorisch oder pneumatisch erfolgt.

8. Fügekopf nach einem der vorstehenden Ansprüche, **dadurch gekennzeichnet, dass** die Befestigungselemente (10) über eine Magnetkraft oder über einen Unterdruck in dem Magazin (2) und/oder der Matrize/dem Greifer (1) festhaltbar sind.

9. Fügekopf nach einem der Ansprüche 3 bis 8, **dadurch gekennzeichnet, dass** die Stufen (2.1, 2.2, 2.3, ... 2.n) nach oben weisende Aufnahmezapfen (2.in) aufweisen, die in komplementär ausgebildete Löcher (10.1) in den Befestigungselementen (10) eingreifen.

## Claims

1. A joining head for fastening a fastening element (10) by means of a die to the surface (20.1) of a component (20) with a gripper (1) that can be linearly displaced in a first displacement direction R_{G} and a magazine (2) for containing a plurality of fastening elements (10) that can be linearly displaced in a second displacement direction R_{M}, wherein the first displacement direction R_{G} runs transversely to the second displacement direction R_{M}, **characterized in that** the gripper (1) is designed as at least one die and the component (20) can be fastenend by clinching.

2. The joining head according to claim 1, **characterized in that** the first displacement direction R_{G} extends at an angle of 90° to the second displacement direction R_{M}.

3. The joining head according to one of the preceding claims, **characterized in that** the magazine (2) features multiple tiers (2.1, 2.2, 2.3, ... 2.n) on a side facing towards the gripper (1) and each tier (2.1, 2.2, 2.3, ... 2.n) receives one fastening element (10).

4. The joining head according to claim 3, **characterized in that** at least to and at most ten tiers (2.1, 2.2, 2.3, ... 2.n) are provided.

5. The joining head according to one of the preceding claims, **characterized in that** the joining head comprises an essentially C-shaped base body (3) with two longitudinal legs (3.1, 3.2) arranged parallel to each other and the magazine (2) is arranged between to the two longitudinal legs (3.1, 3.2).

6. The joining head according to one of the preceding claims, **characterized in that** the magazine (2) can be displaced in the second displacement direction R_{M} to such an extent that it can be guided past the gripper (1).

7. The joining head according to one of the preceding claims, **characterized in that** the displacement of the magazine (2) is achieved by electric motor or pneumatically.

8. The joining head according to one of the preceding claims, **characterized in that** the fastening elements (10) can be firmly held in the magazine (2) and/or the die/gripper (1) via a magnetic force or via a vacuum.

9. The joining head according to one of the claims 3 to 8, **characterized in that** the tiers (2.1, 2.2, 2.3, ... 2.n) have upwardly pointing receiving pins (2.in) which engage in correspondingly shaped holes (10.1) in the fastening elements (10).

## Revendications

1. Tête d'assemblage pour fixer un élément à fixer (10) sur la surface (20.1) d'un composant (20) au moyen d'une matrice, comprenant un préhenseur (1) déplaçable linéairement dans une première direction de déplacement R_{G} et un magasin (2) déplaçable linéairement dans une deuxième direction de déplacement R_{M} et destiné à recevoir une pluralité d'éléments à fixer,
la première direction de déplacement R_{G} s'étendant transversalement à la deuxième direction de déplacement R_{M},
**caractérisée en ce que** le préhenseur (1) est réalisé sous la forme d'au moins une matrice, et la fixation du composant (20) peut s'effectuer par un assemblage par clinchage.

2. Tête d'assemblage selon la revendication 1,
**caractérisée en ce que** la première direction de déplacement R_{G} forme un angle de 90° avec la deuxième direction de déplacement R_{M}.

3. Tête d'assemblage selon l'une des revendications précédentes, **caractérisée en ce que** le magasin (2) présente plusieurs étages (2.1, 2.2, 2.3, ... 2.n) sur un côté tourné vers le préhenseur (1), et chaque étage (2.1, 2.2, 2.3, ... 2.n) reçoit un élément à fixer (10).

4. Tête d'assemblage selon la revendication 3,
**caractérisée en ce qu'**il est prévu deux étages (2.1, 2.2, 2.3, ... 2.n) au minimum et dix au maximum.

5. Tête d'assemblage selon l'une des revendications précédentes, **caractérisée en ce que** la tête d'assemblage comprend un corps de base (3) sensiblement en forme de C ayant deux branches longitudinales (3.1, 3.2) disposées parallèlement l'une à l'autre, et le magasin (2) est disposé entre les deux branches longitudinales (3.1, 3.2).

6. Tête d'assemblage selon l'une des revendications précédentes, **caractérisée en ce que** le magasin (2) peut être déplacé dans la deuxième direction de déplacement R_{M} aussi loin qu'il puisse passer devant le préhenseur (1).

7. Tête d'assemblage selon l'une des revendications précédentes, **caractérisée en ce que** le déplacement du magasin (2) est effectué par un moteur électrique ou par voie pneumatique.

8. Tête d'assemblage selon l'une des revendications précédentes, **caractérisée en ce que** les éléments à fixer (10) peuvent être maintenus dans le magasin (2) et/ou dans la matrice/le préhenseur (1) par une force magnétique ou par une dépression.

9. Tête d'assemblage selon l'une des revendications 3 à 8,
**caractérisée en ce que** les étages (2.1, 2.2, 2.3, ... 2.n) présentent des tenons de réception (2.in) orientés vers le haut, qui s'engagent dans des trous (10.1) de forme complémentaire dans les éléments à fixer (10).
